# EUROPEAN PATENT SPECIFICATION

(11) **EP 1 489 750 B1**
(45) Date of publication and mention of the grant of the patent: **05.03.2008**
(21) Application number: 03076803.0
(22) Date of filing: 10.06.2003
(51) Int. Cl.: H04B 1/04

(54) **Reduction of radio frequency leakage**
Reduktion von radiofrequentem Übersprechen
Réduction de diaphonie de fréquence radio

(43) Date of publication of application: 22.12.2004
(73) Proprietor: Sony Ericsson Mobile Communications AB, 221 88 Lund (SE)
(72) Inventor: Tagesson, Andreas, 226 44 Lund (SE); Gustavsson, Johan, 222 40 Lund (SE)
(74) Representative: Dahnér, Christer

(56) References cited:
- EP-A- 0 780 993
- EP-A- 0 823 790
- GB-A- 2 346 049
- GB-A- 2 362 544
- US-A- 6 091 966
- US-B1- 6 188 877

## Description

### TECHNICAL FIELD OF THE INVENTION

The present invention relates to the field of wireless communication and more particularly to a method of reducing the negative influence on signals transmitted in one of at least two frequency bands, a device for reducing the negative influence on signals transmitted in one of at least two frequency bands and a system of wireless communication devices.

### DESCRIPTION OF RELATED ART

It is within the cellular phones and networks of today well known to transmit signals in different frequency bands. In for instance the case of GSM there is a wide spread use of so called dual band phones, where two different frequency bands can be used for the transmission of signals. In these phones the signals that are to be transmitted from a phone to a base station within a frequency band or vice versa are provided from a modulation circuit to a power amplifier before transmission via an antenna. In the process of transmitting in one frequency band there is sometimes an occurrence of radio frequency leakage back to the modulator, which it is desirable to avoid.

US-6188877 describes a dual/triple mode power amplifier circuit. The circuit is provided with a linear mode amplifier for amplifying digitally modulated signals and a saturated (nonlinear) mode amplifier for amplifying frequency modulated (analog) signals. A switching network switches input signals to an appropriate power amplifying stage with regard to mode and frequency.

EP-823790 describes a dual band mobile phone, where undesirable signal cross-talk is avoided through combining the transmitting section of one band with the receiving section of another other band in one component and vice versa. Power supply of the amplifiers for different bands is switched using power switches in order to control which bands are to be transmitting.

EP-780993 shows a mobile phone, which also has only one connection between a modulator and a pair of power amplifiers provided for different frequency bands. In order to provide different frequency bands a voltage control oscillator and a mixer are provided in connection with one of the amplifiers.

There is thus a need for reducing the radio frequency leakage back to the modulator when processing signals for radio transmission from phones that provide transmission of signals in two different frequency bands.

### SUMMARY OF THE INVENTION

The present invention is thus directed towards solving the problem of reducing the radio frequency leakage back to a signal generating unit occurring when processing signals for transmission in at least one frequency band in devices that use at least two possible transmission bands.

This problem is solved by breaking, when signals are to be transmitted in a first frequency band on a first connection from a signal generating unit to a signal processing unit, a second connection provided between the signal generating unit and the signal processing unit, which second connection is used for a second frequency band.

One object of the present invention is to provide a method that enables the reducing of radio frequency leakage back to a signal generating unit when processing signals for radio transmission.

According to a first aspect of the present invention, the object is achieved by a method of reducing the negative influence on signals transmitted in one of at least two frequency bands comprising the steps of:
transmitting signals in a first frequency band on a first connection from a signal generating unit to a signal processing unit, and
breaking a second connection provided between the signal generating unit and the signal processing unit, which second connection is used for a second frequency band.

A second aspect of the present invention is directed to a method including the features of the first aspect, further comprising the step of providing a control signal by the signal generating unit and the step of breaking is performed in dependence of said control signal.

Another object of the present invention is to provide an alternative method that enables the reducing of radio frequency leakage back to a signal generating unit when processing signals for radio transmission.

According to a third aspect of the present invention, this object is achieved by a method of reducing the negative influence on signals transmitted in one of at least two frequency bands comprising the steps of:
receiving, in a signal processing unit, signals in a first frequency band on a first connection from a signal generating unit, and
breaking a second connection provided between the signal generating unit and the signal processing unit, which second connection is used for a second frequency band.

Another object of the present invention is to provide a device that enables the reducing of radio frequency leakage back to a signal generating unit when processing signals for radio transmission.

According to a fourth aspect of the present invention, this object is achieved by a device for reducing the negative influence on signals transmitted in one of at least two frequency bands comprising:
a signal generating unit for connection to a signal processing unit via at least two connections, and
a connection breaking unit connected to at least one of the two connections and arranged to break the connection between the signal generating unit and the signal processing unit, when signals are to be transmitted from the signal generating unit to the signal processing unit on the other connection.

A fifth aspect of the present invention is directed towards a device including the features of the fourth aspect, wherein the signal generating unit is arranged to provide a control signal and the connection breaking unit is provided with a control signal input for receiving the control signal for actuating the breaking of the connection.

A sixth aspect of the present invention is directed towards a device including the features of the fourth aspect, wherein the connection breaking unit is a switch, preferably an RF switch.

A seventh aspect of the present invention is directed towards a device including the features of the fourth aspect, wherein the signal generating unit is a modulation unit.

An eighth aspect of the present invention is directed towards a device including the features of the fourth aspect, wherein the signal processing unit is a power amplifying unit.

Another object of the present invention is to provide an alternative device that enables the reducing of radio frequency leakage back to a signal generating unit when processing signals for radio transmission.

According to a ninth aspect of the present invention, this object is achieved by a device for reducing the negative influence on signals transmitted in one of at least two frequency bands comprising:
a signal processing unit for connection to a signal generating unit via at least two connections, and
a connection breaking unit connected to at least one of the two connections and arranged to break the connection between the signal generating unit and the signal processing unit, when signals are to be transmitted from the signal generating unit to the signal processing unit on the other connection.

Yet another object of the present invention is to provide yet an alternative device that enables the reducing of radio frequency leakage back to a signal generating unit when processing signals for radio transmission.

According to a tenth aspect of the present invention, this object is achieved by a device for reducing the negative influence on signals transmitted in one of at least two frequency bands comprising:
a signal processing unit and a signal generating unit connected to each other via at least two connections, and
a connection breaking unit connected to at least one of the two connections and arranged to break the connection between the signal generating unit and the signal processing unit, when signals are to be transmitted from the signal generating unit to the signal processing unit on the other connection.

An eleventh aspect of the present invention is directed towards a device including the features of the tenth aspect, in which the device is a portable communication device.

A twelfth aspect of the present invention is directed towards a device including the features of the eleventh aspect, in which the device is a cellular phone.

A thirteenth aspect of the present invention is directed towards a device including the features of the tenth aspect, in which the device is a base station.

Yet another object of the present invention is to provide a system that enables the reducing of radio frequency leakage back to a signal generating unit when processing signals for radio transmission.

According to a fourteenth aspect of the present invention, this object is achieved by a system of wireless communication devices comprising at least one portable communication device and at least one base station, wherein at least one of the devices comprises:
a signal processing unit and a signal generating unit connected to each other via at least two connections, and
a connection breaking unit connected to at least one of the two connections and arranged to break the connection between the signal generating unit and the signal processing unit, when signals are to be transmitted from the signal generating unit to the signal processing unit on the other connection.

The invention has the advantage of reducing the radio frequency leakage back to a signal generating unit when processing signals for radio transmission in one frequency band.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a cellular network comprising a cellular phone and a base station communicating with each other,
fig. 2 shows a block schematic of the relevant parts of the phone for performing the present invention,
fig. 3 shows a flow chart schematically describing the method according to the invention, and
fig. 4 schematically shows a side view of a component, which comprises units according to the invention.

### DETAILED DESCRIPTION OF EMBODIMENTS

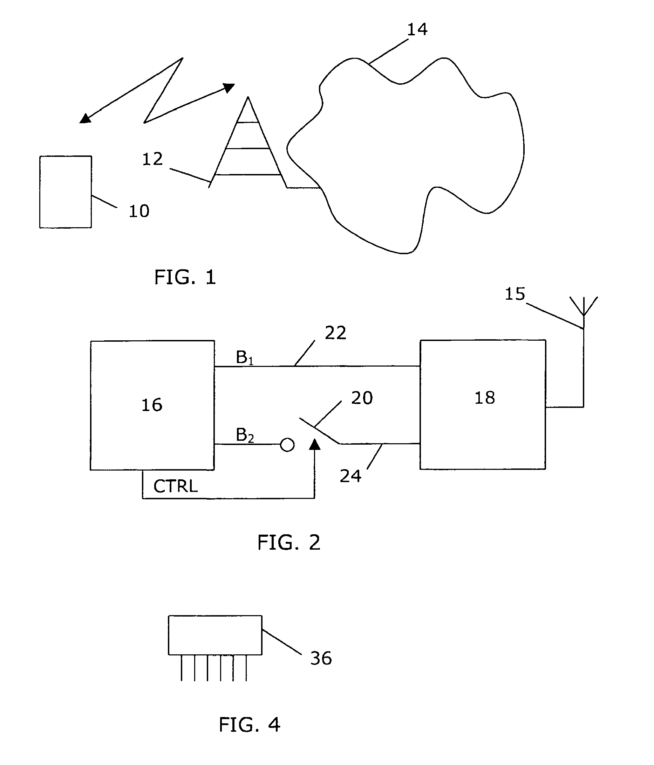

A simplified system according to the invention is shown in schematic form in fig.1. A portable communication device 10 in the form of a cellular phone is communicating with a base station 12 provided in a cellular network 14, which network is a GSM network in this embodiment. The phone communicates with the base station using an antenna, which is in-built, i.e. provided within the casing of the phone. In performing communication with the base station 12, the phone is assigned a frequency within a frequency band B₁, which in the present embodiment of the invention is the so called EGSM band provided in the frequency of about 880 - 915MHz. The system here also supports communication in a second band, which in this embodiment is the so-called DCS band provided between 1710 - 1785 MHz. This is done in order to provide the possibility to use one of the bands, if there is for instance too much traffic in the other band so that a connection cannot be set up between the phone and the base station in the other band.

It should be realised that these bands are just examples of frequency bands that can be used. It should also be realised that a cellular phone is just one example of a device in which the invention can be implemented. The invention is applicable to any device using radio communication.

When transmitting signals in this band between the phone and the base station, there is used a modulation unit, which modulates the frequency in question with the signals to be transmitted. In doing this modulation there has been observed a radio frequency leakage back to the modulation unit when in the process of transmitting the signal with the antenna, especially for some type of components including such a modulation unit. A typical such circuit is an ASIC circuit.

The invention is directed towards reducing this radio frequency leakage back to the modulation unit, which is dependent on the relationship between such a modulation unit and other units in the phone as well as to reducing these problems in a base station if this problem is encountered there.

Because of this relationship, the invention will now be described in relation to fig. 2, which shows a block schematic of the parts of the phone, which are relevant to the problem and its solution. It should be realised that these parts can just as well be provided in the base station.

In fig. 2 there is shown a signal generating unit in the form of a modulation unit 16, which is connected to a signal processing unit in the form of a power amplifying unit 18 via a first connection 22, which first connection is mainly used for transmitting signals in the first frequency band B₁. The modulation unit 16 is also connected to the power amplifying unit 18 via a second connection 24, which second connection is mainly used for transmitting signals in the second frequency band B₂. In this section connection there is inserted a connection breaking unit 20 in the form of a switch 20, which is preferably an RF switch. The modulation unit also provides a control signal CTRL, which is used for controlling the switch 20. The power amplifying unit 18 is connected to an antenna 15 for communicating with the base station in the system.

It should furthermore be realised that both the first and second connections are used for transmitting signals from the modulation unit to the power amplifying unit. They are also optimised for use in relation to one frequency band each, but can be used for other neighbouring frequency bands.

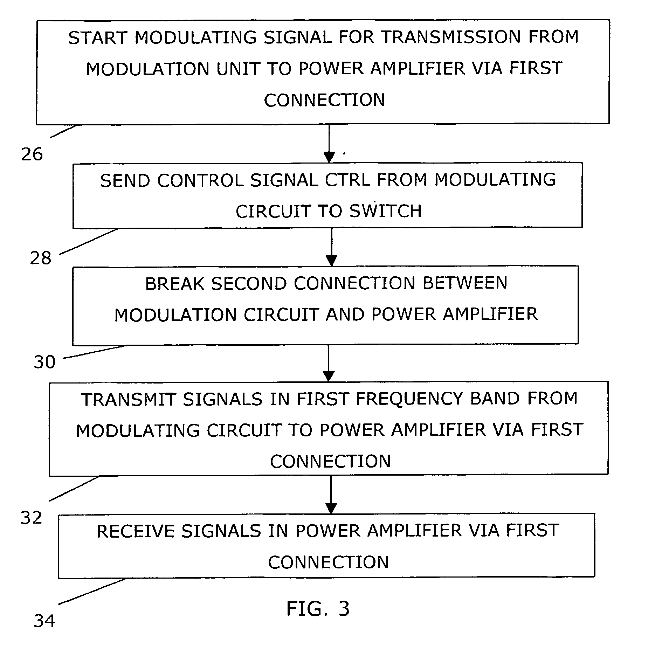

The functioning of the invention will now be described with reference being made to fig. 2 and 3, where the latter shows a block schematic for performing the invention according ot the invention.

First the modulation unit 16 starts modulating a signal to be transmitted in the first frequency band B₁ for enabling transmission to the power amplifying unit 18 over the first connection 22, step 26. When in the process of doing this, the modulation unit 16 emits a control signal CTRL to a control input of the switch 20, step 28. This makes the switch go from a closed state to an open state, which breaks the second connection 24 between modulation unit 16 and the power amplifying unit 18, step 30. Thereafter the modulation unit 18 transmits signals in the first frequency band B₁ over the first connection 22 to the power amplifying unit 18, step 32. The power amplifying unit 18 receives these signals, step 34, processes them through amplification and thereafter provides them to the antenna 15 for sending to the base station.

It has been discovered that the provision of this switch in the second connection 24, isolates the power amplifying unit 18 from the modulation unit 16 and prevents RF energy from reaching the modulation unit when in the open state. This reduces the radio frequency leakage back to the modulation unit to acceptable levels when transmitting in the first frequency band B₁.

It should be realised that the switch is closed when the modulation unit is to transmit in the second frequency band B₂. As an alternative to providing the switch in the second connection it is also possible to provide it in the first connection in order to reduce the radio frequency leakage back to the modulation unit when transmitting in the second band over the second connection.

The devices described above are normally provided in one or more components or chips, where one such chip 36 is schematically outlined in fig. 4. The switch can when two chips are provided, either be provided in the chip including the modulation unit or in the chip including the power amplifying unit. It can of course also be provided as a separate entity connected between these chips.

The present invention can be varied in many ways. As an alternative to providing the switch in the second connection it is also possible to provide it in the first connection in order to reduce the radio frequency leakage back to the modulation unit when transmitting in the second band over the second connection. It is also possible to provide the possibility to break the first and the second connections in the same device in that the second connection is broken when transmitting on the first connection and the first connection is broken when transmitting on the second connection. This functionality can furthermore be provided by only using one switch. It is furthermore possible to have more than two connections, in which case there can be provided a breaking of connections ranging from breaking each one of the connections not used for transmission to only breaking one of them. This can also be achieved with a number of switches ranging from only one switch breaking and making all the connections up to one switch per connection, where each is only responsible for one connection. The connections are furthermore dimensioned for transmitting signals in the two desired bands. They can however be used also for transmission in other bands, which are preferably neighbouring bands. The second connection is for instance in the preferred embodiment optimised for the DCS band. This connection can then also be used for the PCS band, which is provided around 1900 MHz. It should however be realised that the invention is in no way limited to the use of a specific frequency band. Therefore the invention is only to be limited by the following claims.

## Claims

1. Method of reducing the negative influence on signals transmitted in one (B₁) of at least two frequency bands (B₁, B₂)provided by the same cellular network comprising the steps of:
when transmitting or receiving signals in a first frequency band on a first connection (22) between a signal generating chip (16) and a power amplifying chip (18), (step 32),
breaking a second separate connection (24) provided between the signal generating chip and the power amplifying chip, which second connection is used for a second frequency band (B₂), (step 30), and
when transmitting or receiving signals in the second frequency band on the second connection between said signal generating chip and said power amplifying chip,
breaking the first connection (22) between the signal generating chip and the power amplifying chip.

2. Method according to claim 1, further comprising the step of providing a control signal (CTRL) by the signal generating chip (step 28) and the step of breaking is performed in dependence of said control signal.

3. Device (310; 12) for reducing the negative influence on signals transmitted in one of at least two frequency bands provided by the same cellular network comprising:
a power amplifying chip (18) and a signal generating chip (16) connected to each other via at least a first and a second separate connection (22, 24), and
at least one connection breaking unit (20) connected to the first (22) and the second (24) connection and arranged to break the second connection (24) between the signal generating chip and the power amplifying chip, when signals are to be transmitted from the signal generating chip to the power amplifying chip in the first frequency band on the first connection (22) and to break the first connection (22) between the signal generating chip and the power amplifying chip, when signals are to be transmitted from the signal generating chip to the power amplifying chip in the second frequency band on the second connection (24).

4. Device according to claim 3, wherein the signal generating chip is arranged to provide a control signal (CTRL) and the connection breaking unit is provided with a control signal input for receiving the control signal for actuating the breaking of the connection.

5. Device according to claim 4, wherein the connection breaking unit is a switch, preferably an RF switch.

6. Device according to any of claims 3 - 5, wherein the signal generating chip is a modulation chip.

7. Device according to any of claims3- 6, in which it is a portable communication device (10).

8. Device according to claim 7, in which it is a cellular phone.

9. Device according to claim 7, in which it is a base station (12).

10. System of wireless communication devices comprising at least one portable communication device (10) and at least one base station (12), wherein at least one of the devices comprises a device for reducing the negative influence on signals transmitted in one of at least two frequency bands according to any of claims 3 - 6.

## Patentansprüche

1. Verfahren zum Reduzieren des negativen Einflusses auf Signale, die in einem (B₁) von wenigstens zwei Frequenzbändern (B₁, B₂) übertragen werden, die von dem gleichen Mobilfunknetz bereitgestellt werden, mit den Schritten:
beim Senden oder Empfangen von Signalen in einem ersten Frequenzband auf einer ersten Verbindung (22) zwischen einem Signalerzeugungschip (16) und einem Leistungsverstärlcungschip (18) (Schritt 32) Unterbrechen einer zweiten separaten Verbindung (24) (Schritt 30), die zwischen den Signalerzeugungschip und dem Leistungsverstärkungschip vorgesehen ist, welche zweite Verbindung für ein zweites Frequenzband (B₂) benutzt wird, und
beim Senden oder Empfangen von Signalen im zweiten Frequenzband auf der zweiten Verbindung zwischen dem Signalerzeugungschip und dem Leistungsverstärkungschip Unterbrechen der ersten Verbindung (22) zwischen dem Signalerzeugungschip und dem Leistungsverstärkungschip.

2. Verfahren nach Anspruch 1, ferner mit dem Schritt des Bereitstellens eines Steuersignals (CTRL) durch den Signalerzeugungschip (Schritt 28), wobei der Schritt des Unterbrechens in Abhängigkeit von dem Steuersignal durchgeführt wird.

3. Vorrichtung (310; 12) zum Reduzieren des negativen Einflusses auf Signale, die in einem von wenigsten zwei Frequenzbändern übertragen werden, die durch das gleiche Mobilfunknetz bereitgestellt werden, mit
einem Leistungsverstärlcungschip (18) und einem Signalerzeugungschip (16), die miteinander über wenigstens eine erste und eine zweite separate Verbindung (22, 24) verbunden sind, und
wenigstens einer Verbindungsunterbrechungseinheit (20), die mit der ersten (22) und der zweiten (24) Verbindung verbunden ist und angeordnet ist, um die zweite Verbindung (24) zwischen dem Signalerzeugungschip und dem Leistungsverstärkungschip zu unterbrechen, wenn Signale von dem Signalerzeugungschip zum Leistungsverstärkungschip im ersten Frequenzband auf der ersten Verbindung (22) übertragen werden sollen, und um die erste Verbindung (22) zwischen dem Signalerzeugungschip und dem Leistungsverstärkungschip zu unterbrechen, wenn Signale von dem Signalerzeugungschip zum Leistungsverstärkungschip im zweiten Frequenzband auf der zweiten Verbindung (24) übertragen werden sollen.

4. Vorrichtung nach Anspruch 3, bei welcher der Signalerzeugungschip angeordnet ist, um ein Steuersignal (CTRL) bereitzustellen, und die Verbindungsunterbrechungseinheit mit einem Steuersignaleingang zum Empfangen des Steuersignals zum Aktivieren der Unterbrechung der Verbindung versehen ist.

5. Vorrichtung nach Anspruch 4, bei welcher die Verbindungsunterbrechungseinheit ein Schalter, vorzugsweise ein RF-Schalter ist.

6. Vorrichtung nach einem der Ansprüche 3 bis 5, bei welcher der Signalerzeugungschip ein Modulationschip ist.

7. Vorrichtung nach einem der Ansprüche 3 bis 6, wobei sie ein tragbares Kommunikationsgerät (10) ist.

8. Vorrichtung nach Anspruch 7, wobei sie ein Mobiltelefon ist.

9. Vorrichtung nach Anspruch 7, wobei sie eine Basisstation (12) ist.

10. System von drahtlosen Kommunikationsgeräten mit wenigstens einem tragbaren Kommunikationsgerät (10) und wenigstens einer Basisstation (12), wobei wenigstens eines der Geräte eine Vorrichtung nach einem der Ansprüche 3 bis 6 zum Reduzieren des negativen Einflusses auf Signale, die in einem von wenigstens zwei Frequenzbändern übertragen werden, aufweist.

## Revendications

1. Procédé de réduction de l'influence négative sur des signaux émis sur une bande (B₁), parmi au moins deux bandes de fréquences (B₁, B₂) fournies par le même réseau cellulaire, comprenant les étapes consistant à :
lors de l'émission ou la réception de signaux sur une première bande de fréquences sur une première connexion (22) entre une puce de production de signaux (16) et une puce d'amplification de puissance (18) (étape 32),
interrompre une seconde connexion distincte (24) réalisée entre la puce de production de signaux et la puce d'amplification de puissance, cette seconde connexion étant utilisée pour une seconde bande de fréquences (B₂) (étape 30), et
lors de l'émission ou la réception de signaux sur la seconde bande de fréquences sur la seconde connexion entre ladite puce de production de signaux et ladite puce d'amplification de puissance,
interrompre la première connexion (22) entre la puce de production de signaux et la puce d'amplification de puissance.

2. Procédé selon la revendication 1, comprenant en outre l'étape consistant à fournir un signal de commande (CTRL) par la puce de production de signaux (étape 28), l'étape d'interruption étant exécutée en fonction dudit signal de commande.

3. Dispositif (310 ; 12) de réduction de l'influence négative sur des signaux émis sur l'une d'au moins deux bandes de fréquences fournies par le même réseau cellulaire, comprenant :
une puce d'amplification de puissance (18) et une puce de production de signaux (16), connectées ensemble via au moins une première et une seconde connexion distincte (22, 24), et
au moins une unité d'interruption de connexion (20) connectée à la première (22) et à la seconde (24) connexion et conçue pour interrompre la seconde connexion (24) entre la puce de production de signaux et la puce d'amplification de puissance lorsque des signaux doivent être émis entre la puce de production de signaux et la puce d'amplification de puissance sur la première bande de fréquences sur la première connexion (22) et pour interrompre la première connexion (22) entre la puce de production de signaux et la puce d'amplification de puissance lorsque des signaux doivent être émis entre la puce de production de signaux et la puce d'amplification de puissance sur la seconde bande de fréquences sur la seconde connexion (24).

4. Dispositif selon la revendication 3, dans lequel la puce de production de signaux est conçue pour fournir un signal de commande (CTRL) et l'unité d'interruption de connexion est dotée d'une entrée de signal de commande destinée à recevoir le signal de commande afin de réaliser l'interruption de la connexion.

5. Dispositif selon la revendication 4, dans lequel l'unité d'interruption de connexion est un commutateur, de préférence un commutateur RF.

6. Dispositif selon l'une quelconque des revendications 3 à 5, dans lequel la puce de production de signaux est une puce de modulation.

7. Dispositif selon l'une quelconque des revendications 3 à 6, celui-ci étant un dispositif de communication portable (10) .

8. Dispositif selon la revendication 7, celui-ci étant un téléphone cellulaire.

9. Dispositif selon la revendication 7, celui-ci étant une station de base (12).

10. Système de dispositifs de communication sans fil comprenant au moins un dispositif de communication portable (10) et au moins une station de base (12), dans lequel au moins l'un des dispositifs comprend un dispositif de réduction de l'influence négative sur des signaux émis dans l'une d'au moins deux bandes de fréquences, selon l'une quelconque des revendications 3 à 6.
